(19) Europäisches Patentamt
European Patent Office
Office européen des brevets

(11) EP 2 526 140 B1

(12) **EUROPEAN PATENT SPECIFICATION**

(45) Date of publication and mention of the grant of the patent:
**11.06.2014 Bulletin 2014/24**

(21) Application number: **11705658.0**

(22) Date of filing: **20.01.2011**

(51) Int Cl.:
***C08J 3/075*** *(2006.01)*

(86) International application number:
**PCT/GB2011/050093**

(87) International publication number:
**WO 2011/089432 (28.07.2011 Gazette 2011/30)**

(54) **HYDROGEL SYNTHESIS**

HYDROGELSYNTHESE

SYNTHÈSE D'HYDROGEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.01.2010 GB 201000879**

(43) Date of publication of application:
**28.11.2012 Bulletin 2012/48**

(73) Proprietor: **The University of Reading**
**Reading RG6 6AU (GB)**

(72) Inventors:
- **KHUTORYANSKIY, Vitaliy**
  **Reading RG6 3XE (GB)**
- **KHUTORYANSKAYA, Olga**
  **Reading RG6 3XE (GB)**
- **COOK, Joseph Peter**
  **Reading RG2 0AX (GB)**
- **GOODALL, Glenn William**
  **Peterborough PE3 8JJ (GB)**

(74) Representative: **Foster, Simon**
**Barker Brettell LLP**
**First Floor, Atrium Court**
**15-17 Jockey's Fields**
**London WC1R 4BW (GB)**

(56) References cited:
**WO-A2-2008/131451**

EP 2 526 140 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention provides a method for preparing a hydrogel.

A hydrogel is a three-dimensionally cross-linked network formed from a hydrophilic polymer which is capable of imbibing a large amount of water and/or biological fluids. It can be prepared from any water-soluble polymer or monomer. In a swollen state, a hydrogel is a soft, wet and elastic material that resembles natural living tissue, which makes it a candidate for developing a biomaterial and/or a dosage form.

Applications of hydrogels in biomedical and pharmaceutical sciences include soft contact lenses, wound dressings, drug delivery systems, and scaffolds for tissue engineering. Hydrogels have a porous structure and transparency, which can be easily tuned by varying the density of cross-linking in the gel matrix and the affinity of the network to a solvent, for example water. The porosity of hydrogels permits loading of both small and relatively large molecules into the network, which can subsequently be released at a rate controlled by the molecule structure and size as well as by the nature of the matrix.

Depending on the nature of cross-linking, hydrogels can be subdivided into two classes: physical and chemical hydrogels. A physical hydrogel is formed when macromolecules of a water-soluble polymer are linked by physical interactions such as electrostatic attraction forces, hydrogen bonding, hydrophobic effects, van der Waals forces or formation of crystalline domains and chain entanglements. Examples of physical hydrogels include a gelatin gel, a calcium alginate gel or polyvinyl alcohol cryo-gels. Physical hydrogel formation is usually a reversible process i.e. the hydrogel can be re-dissolved by changing environmental conditions such as pH, ionic strength, temperature and solvent nature. In contrast, a chemical hydrogel is formed when the macromolecules of a water-soluble polymer are linked together by covalent bonds and cannot be disrupted by changes in environmental conditions.

The most commonly used approaches for synthesis of chemical hydrogels are: (1) polymerisation of a hydrophilic monomer in the presence of a cross-linking agent (so-called three-dimensional polymerisation); and (2) cross-linking of ready-made macromolecules of water-soluble polymers. A problem with the former approach is that it typically uses unsaturated monomers (i.e. in free radical polymerisations) which are generally harmful or even toxic. Cross-linking of ready-made macromolecules can be used for synthesis of hydrogels from commercially available water-soluble polymers.

Cross-linking of macromolecules can be achieved by the irradiation of water-soluble polymers in solid state or solutions with ionising radiation such as gamma-rays, X-rays, accelerated electrons, or UV-radiation.

The advantages of the use of ionising radiation for cross-linking water-soluble polymers include easy process control, the possibility of joining hydrogel formation and sterilisation in one technological step and no necessity to add initiators and cross-linkers. Irradiation of polymers can be performed either in aqueous solution or in the solid state. The latter is generally found to be less efficient compared to solutions, as it requires higher doses of radiation. The disadvantages of radiation-based techniques include difficulty in obtaining access to radiation facilities, health and safety precautions during production and relatively high production costs. Additionally, not all polymers can be cross-linked by this technique as some macromolecules tend to degrade upon irradiation. For example, radiation treatment of water-soluble polysaccharides such as cellulose ethers or chitosan results in their chains scission and reduction in solution viscosity rather than gelation.

Some water-soluble polymers can be easily cross-linked by reacting with low molecular weight cross-linkers. Examples include the use of glutaraldehyde for cross-linking hydroxyl and amino-containing polymers such as poly(vinyl alcohol), cellulose ethers, chitosan, guar gum and gelatin.

Some water-soluble polymers and their mixtures (blends) can be cross-linked in the (solvent free) solid state by thermal treatment. This approach was reported in a number of studies of polymeric films based on compositions of carboxyl-containing polymers and non-ionic polyalcohols. The thermal treatment of dry polymeric blends results in esterification reactions and formation of covalent cross-links. The swelling properties of cross-linked films in water depend on the temperature and time of thermal treatment as well as the poly(carboxylic acid):non-ionic polymer ratio in the blend. The disadvantage of this approach is the limitation on sample thickness - only thin films can be effectively cross-linked by thermal treatment in the solid state.

A way of ameliorating these problems has been sought.

According to the invention, there is provided a method for preparing a hydrogel from a hydrophilic polymer having one or more functional groups which are capable of co-reacting in a condensation reaction which method comprises the steps of:

(i) preparing a solution of the polymer;

(ii) heating the solution to a temperature sufficient for the condensation reaction to take place for a period of time sufficient for the hydrogel to cross-link wherein where the hydrophilic polymer comprises a first and a second hydrophilic polymer, step (i) comprises a step of mixing the hydrophilic polymers to prepare a homogeneous intimate mixture of the polymers; and wherein the heating step (ii) is carried out at a pressure greater than atmospheric

pressure.

The method of the invention is advantageous because it is relatively low cost, it is a safer procedure with less health & safety concerns, it is carried out in a liquid state and is not limited by film thickness. Surprisingly, it has been found possible to cross-link particular combinations of hydrophilic polymers sufficiently to form a hydrogel in aqueous solution using heating. On further investigation of this phenomenon it has been found that this heat induced cross-linking in solution phase only occurs where there are paired reactive groups on the polymer present that are capable of taking part in a condensation reaction to form a cross-linking covalent bond. This finding was unexpected since until now, the current art has taught that thermal cross-linking required polymers and their mixtures (blends) to be in a solid state allow sufficient proximity between the reactive groups.

A condensation reaction is a reaction between two groups which results in the two groups being joined together and the formation of a small molecule such as a water molecule, hydrogen chloride, acetic acid or methanol.

In some embodiments, the hydrophilic polymer may be a single multifunctional hydrophilic polymer which comprises one (or for example two) or more functional groups which are capable of co-reacting in a condensation reaction. Alternatively, the hydrophilic polymer may comprise two or more hydrophilic polymers wherein each of which comprises one or more functional groups which groups are capable of co-reacting in a condensation reaction. For example the hydrophilic polymer may comprise a first and a second hydrophilic polymer wherein the first hydrophilic polymer has a first functional group and the second hydrophilic polymer has a second functional group wherein the first and the second functional groups are capable of co-reacting in a condensation reaction. In some embodiments, the hydrophilic polymer may be a saturated or unsaturated carbon chain polymer or a polysaccharide polymer. The functional groups may be provided as a substituent on consecutive atoms on the polymer or there may be one or more polymer chain atoms spaced between functional group substituents. If the spacing between functional group substituents is increased, a skilled person would expect the degree of cross-linking to decrease. In the limit, if the spacing between functional groups is too high, the degree of cross-linking may be too low for a hydrogel to be formed. A skilled person would easily be able to determine a suitable level of spacing between functional groups on the hydrophilic polymer for an appropriate hydrogel to be formed.

In some embodiments, the hydrophilic polymer having one or more functional groups which are capable of co-reacting in a condensation reaction may be provided by a hydrophilic polymer having one or more functional groups and a condensation monomer having one or more functional groups which groups are capable of co-reacting in a condensation reaction. For example the hydrophilic polymer may have a first functional group and the condensation monomer may have a second functional group wherein the first and the second functional groups are capable of co-reacting in a condensation reaction. In such an embodiment, step (i) comprises a step of mixing the hydrophilic polymer and condensation monomer to prepare a homogenous intimate mixture of the polymer and condensation monomer.

It should be understood that in the method of the invention, step (ii) comprises heating the solution under pressure for a period of time sufficient for the hydrophilic polymer to crosslink.

In some embodiments, the method of the invention comprises a method for preparing a hydrogel from one or more starting materials comprising a hydrophilic polymer having one or more functional groups which are capable of co-reacting in a condensation reaction which method comprises the steps of:

(i) preparing a solution of the starting materials;

(ii) heating the solution to a temperature sufficient for the condensation reaction to take place for a period of time sufficient for the starting materials to cross-link wherein where the starting materials comprise (a) a first and a second hydrophilic polymer; and/or (b) a first hydrophilic polymer and a condensation monomer having one or more functional groups which are capable of co-reacting in a condensation reaction, wherein step (i) comprises a step of mixing the starting materials to prepare a homogeneous intimate mixture and wherein the heating step (ii) is carried out at a pressure greater than atmospheric pressure. References herein to the polymer or to the hydrophilic polymer should be understood to refer also the starting materials.

Where the hydrophilic polymer (or the starting materials) comprises two or more hydrophilic polymers (for example, a first and a second hydrophilic polymer or a hydrophilic polymer and a condensation monomer) the step of preparing the aqueous solution of the hydrophilic polymer comprises a step of mixing the hydrophilic polymers to prepare a homogeneous intimate mixture of the polymers. The mixing step may be carried out for from 1, 4, 6, or 12 hours to 14, 18, 24 or 36 hours, for example. The length of time depends upon the viscosity of the polymer solution and the type and efficiency of the mixer used. For a laboratory device, a long period of time may be required compared to an industrial device. A skilled person would be able to determine a suitable length of time for the mixing step. The advantage of the mixing step is that it ensures an efficient condensation reaction between the different functional groups on the hydrophilic polymers. It is not necessary for the multifunctional hydrophilic polymer. The mixing step differentiates the method of

the invention from the use of ionising radiation to cross-link because the ionising radiation method does not require co-reaction of two or more functional groups.

The two or more functional groups which are capable of co-reacting in a condensation reaction may include a first functional group and a second functional group. A first functional group includes an alcohol, a carbonyl, and/or an ester group, for example a saturated or unsaturated carbon chain which is substituted by one or more hydroxyl, carbonyl and/or carboxylic ester groups. A second functional group includes an amide group, a carboxylic acid group, a carbonyl group and/or a carboxylic ester group, for example a saturated or unsaturated carbon chain which is substituted by one or more amide, carboxylic acid, carbonyl and/or carboxylic ester groups.

In some embodiments, where the hydrophilic polymer comprises two or more hydrophilic polymers, the hydrophilic polymers may be two or more of polyvinyl alcohol (PVA), polyacrylic acid (PAA), poly (methyl ether-*alt*-maleic anhydride) (pMVEMA), polyvinylpyrrolidone (pVP), 2-hydroxyethyl cellulose (HEC) and polyacrylamide (pAAM). In some embodiments, where the hydrophilic polymer is a single multifunctional hydrophilic polymer which comprises two or more functional groups, the hydrophilic polymer may be polyacrylamide-*co*-acrylic acid and/or polyacrylamide.

In some embodiments, the hydrophilic polymer used in the invention may be one or more of the following systems which are intended to illustrate the combinations of functional groups which may be used (the nature of the saturated or unsaturated carbon chain which is substituted by the functional group(s) may vary):

(i) a system for forming a hydrogel by cross-linking polyvinyl alcohol and polyacrylic acid (pVA + pAA) where the gel structure formed by a condensation (ester) bond is illustrated (in the other systems, corresponding condensation bonds are formed but are not illustrated):

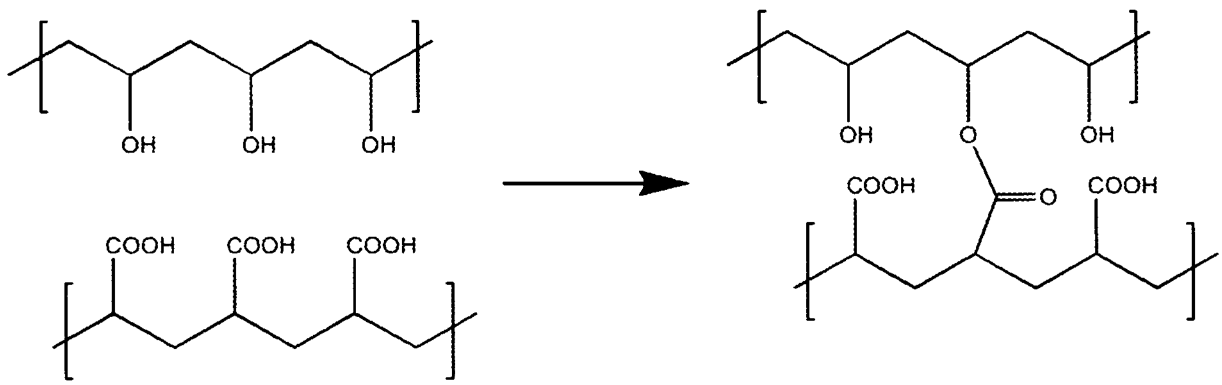

(ii) a system for forming a hydrogel by cross-linking polyacrylamide and polyacrylic acid (pAAM + pAA):

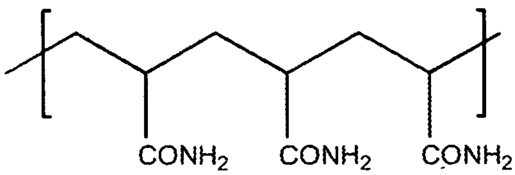

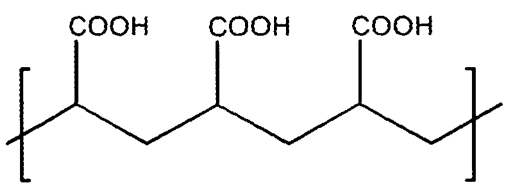

(iii) a system for forming a hydrogel by cross-linking polyvinyl alcohol and poly(methyl vinyl ether-alt-maleic anhydride) (pVA + pMVEMA):

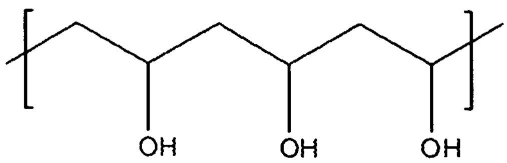

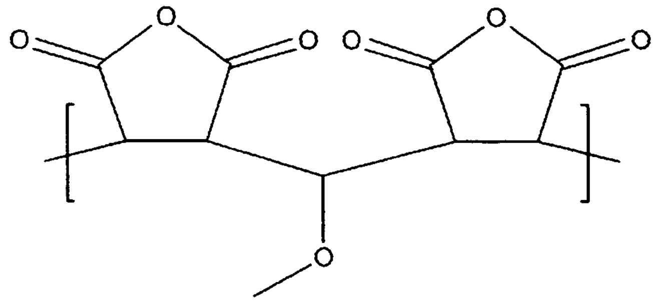

(iv) a system for forming a hydrogel by cross-linking polyvinyl alcohol and polyvinyl pyrrolidone (pVA + pVP):

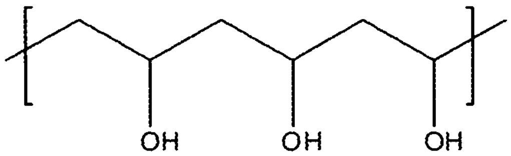

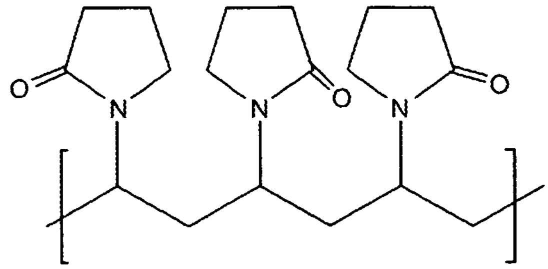

(v) a system for forming a hydrogel by cross-linking poly(acrylamide-co-acrylic acid) (p(AAM-co-AA)):

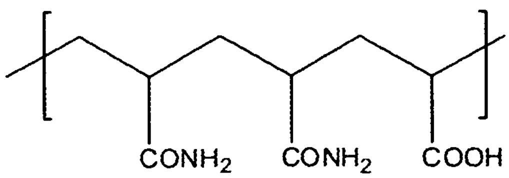

(vi) a system for forming a hydrogel by cross-linking polyacrylamide (pAAM):

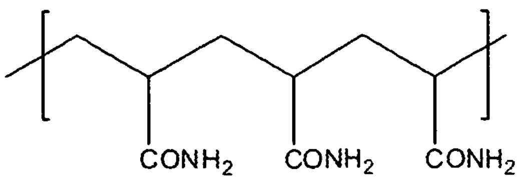

(vii) a system for forming a hydrogel by cross-linking hydroxyethyl cellulose and poly(methyl vinyl ether-alt-maleic anhydride) (HEC + pMVEMA):

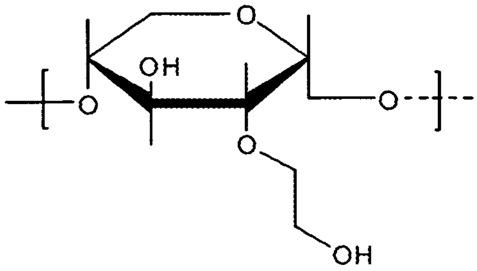

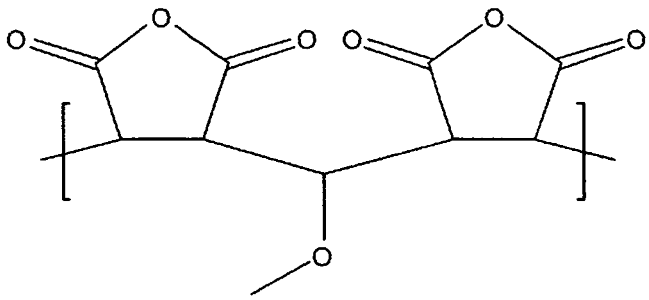

(viii) a system for forming a hydrogel by cross-linking dextran and poly(methyl vinyl ether-alt-maleic anhydride) (pMVEMA):

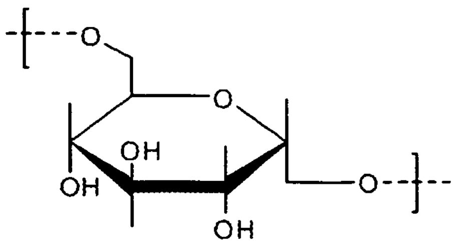

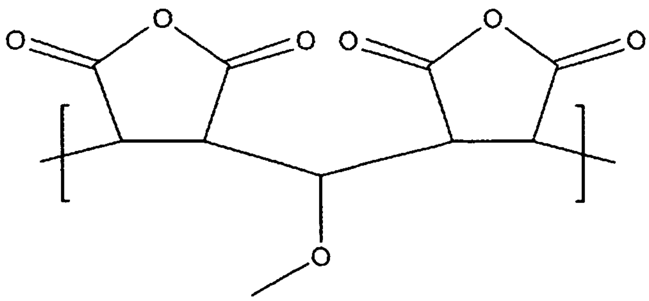

(ix) a system for forming a hydrogel by cross-linking polyacrylic acid and triethylamine (pAA + TEA):

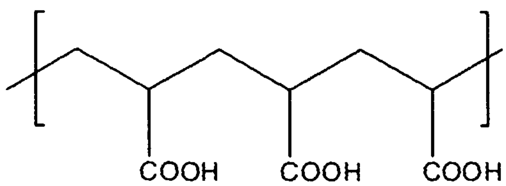

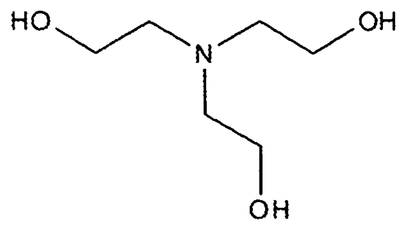

(x) a system for forming a hydrogel by cross-linking polyacrylic acid and tris(2-aminoethyl)amine (pAA + TREN):

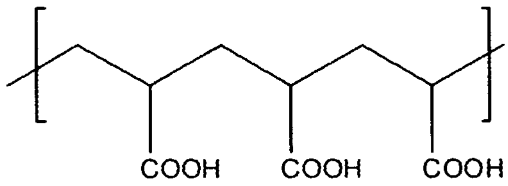

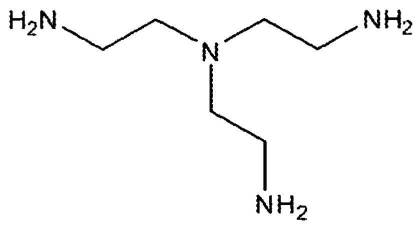

(xi) a system for forming a hydrogel by cross-linking polyacrylic acid (pAA) and glycerol or ethylene glycol

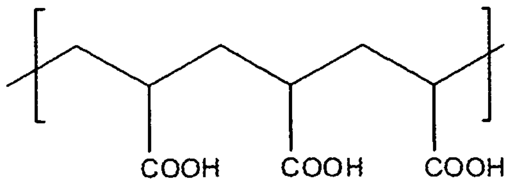

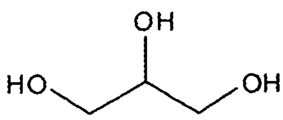

OR

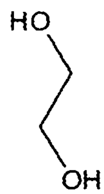

In some embodiments, the hydrophilic polymer used in the invention may be one or more of systems (i) io (viii). Advantages of using such systems include that they do not include a monomer. There are concerns about the presence of unreacted cross-linkers in hydrogels, due to the potential for toxicity e.g. residual glutaraldehyde. Many non-condensation monomers used for the synthesis of hydrogels (in particular unsaturated monomers for free-radical polymerisation) are allergenic, harmful or even toxic and care has to be taken to purify the final product from unreacted residues. Condensation monomers are less toxic but systems (i) to (viii) are advantageous because of the lack of monomers that might leach out of the hydrogel formed over time. This purification is often performed by extraction with water and, depending on the gel size, hydrophilicity and porosity, this process can take up to several weeks. When the hydrophilic polymer is one or more of systems (i) to (viii), such problems are avoided.

In some embodiments, the molar ratio of the first hydrophilic polymer to the second hydrophilic polymer or condensation monomer may be at least 1:1. The molar ratio may be in a range of from 1:1 to 2:1, for example about 1.5:1.

In one embodiment, the heating step may be carried out by irradiating the solution with microwave radiation and/or by heating the solution in an autoclave, a pressure cooker or other heating apparatus in an unsealed container or directly in contact with the heating apparatus. In one embodiment, the heating step may be carried out for from 10 to 60 minutes, for example from 15 to 40 minutes. The heating step is carried out for sufficient period of time for the polymer

to crosslink without being so long for substantial degradation of the polymer to take place. Substantial degradation of the polymer is shown when the polymer changes colour and or where there is a reduction in viscosity compared to the initial solution. A skilled person would be able to determine a suitable length of time.

In some embodiments, the hydrophilic polymer is used at a concentration of from about 0.1, preferably from about 0.5 mole of repeat unit per litre to about 4, preferably about 2 mole of repeat unit per litre, for example about 1 mole of repeat unit per litre. In some embodiments, the solution of the hydrophilic polymer is not pre-concentrated, for example the solution of hydrophilic polymer is a non-dried or non-concentrated hydrophilic polymer solution. In some embodiments of the invention, the method of the invention consists substantially of steps (i) and (ii) as defined herein or the method of the invention consists of steps (i) and (ii) as defined above; there is no step of drying or otherwise concentrating the solution of the polymer obtained in step (i) in the method of the invention. The advantage of not using a dried or concentrated hydrophilic polymer solution is that the product of the method of the invention is a hydrogel with a high swelling ratio. In some embodiments, the hydrophilic polymer is used at a concentration of from 0.1 wt%, preferably from 0.5 wt% to the normal solubility limit of the polymer, preferably to 50 wt%, preferably to 30 wt%, more preferably to 20 wt%. The "normal solubility limit of the polymer" refers to the normal solubility of the polymer in the solvent used to form the solution of the polymer in step (i) at ambient temperature and pressure.

In one embodiment, the heating step may be carried out at a temperature of from 100 to 170°C, for example a temperature of from 140 to 160°C. The heating step is carried out at a temperature sufficient for the polymer (or starting materials) to crosslink without being so high for substantial degradation of the polymer to take place. Substantial degradation of the polymer is shown when the polymer changes colour and or where there is a reduction in viscosity compared to the initial solution. A skilled person would be able to determine a suitable temperature.

In some embodiments, the heating step may be carried out under a pressure higher than atmospheric pressure. The advantages of using a pressure higher than atmospheric pressure include that the temperature can be raised above the normal boiling point of the solution, so the condensation reaction can be performed more quickly. In some embodiments, where a hydrogel with low solvent content (e.g. partially dehydrated) is desired, the heating step may be carried out in a vented container having a pressure higher than atmospheric pressure, such as a pressure cooker. In some embodiments, where a hydrogel with high solvent content (e.g. partially or fully hydrated) is desired, the heating step may be carried out in a sealed container such as a sealed container in a microwave or in an autoclave. A microwave has the advantage that it is quicker to use than an autoclave.

In some embodiments, the heating step (ii) is performed at a pressure of from 15 to 200 psi (from 103kPa to 1380kPa). In practice, the pressure at which heating step (ii) is performed will depend upon the equipment used. In a sealed, pressurised system such as a microwave, it is usual to set the operating temperature as a constant which will result in the build up of pressure in a sealed container. Thus pressure may not be defined by the user, but will take a value dependent on the temperature, contents and size of the container. It is optional, but usual however, to set a safe maximum pressure such that if this is reached, the equipment being used would either stop heating, sound an alarm or cut out, for example by releasing the pressure in the sealed container. Where a temperature of 150°C or higher is used, it is likely that a pressure of 200 psi (1380kPa) will be reached in the early stages of the process, but then quickly settle down to below 100 psi (690kPa). For lower temperatures, the pressure is unlikely to reach 200 psi (1380kPa). For example, using PAA and PVA at 120°C gives a peak of 140 psi (96.5kPa) in the early stages and the pressure then settles down to around 20-40 psi (138kPa-276kPa). The pressure used may vary depending on the polymer combination, as would be known by a person of skill in the art.

In other pressurised systems which operate at a constant pre-determined pressure (such as an autoclave or a microwave), the heating step (ii) will be performed at a temperature dependent on the solvent used to prepare the solution of the polymer. Where the solvent is water and heating step (ii) is performed in an autoclave, it is well established that a temperature of 121°C will give a pressure of 15 psi (103kPa) and a temperature of 132°C will give a pressure of 30 psi (206kPa). Similarly, the operating pressure of a pressure cooker can be measured and/or calculated from the pre-determined operating temperature. Thus an autoclave can be used to operate the heating step (ii) at a temperature above 120°C which is ideal for some polymer combinations which require at least this temperature in order to react to form a gel. A further option is to use a pressure cell, as illustrated in Example 10 where a temperature of 150°C is used for the heating step (ii).

In some embodiments, the solution of the polymer is a solution of the polymer in a polar protic (for example an alcohol, carboxylic acid or water) or aprotic solvent (for example dimethylsulfoxide or a halosolvent such as dichloromethane or dimethylformamide). An advantage of using an alcohol as the solvent is that the hydrogel formed may be an antimicrobial hydrogel. Where the heating step is carried out by irradiating the solution with microwave radiation, the solution of the polymer may be an aqueous solution for a better heating effect.

The invention is illustrated with reference to the following figures of the accompanying drawings in which:

Figure 1 shows a graph showing average dry gel yield (weight %) on the vertical y-axis and irradiation temperature on the horizontal x-axis for reactions performed as described in Example 1 between polyacrylic acid and polyvinyl

alcohol; and

**Figure 2** shows a graph showing average equilibrium swelling degree (ESD) on the vertical y-axis and irradiation temperature on the horizontal x-axis for reactions performed as described in Example 1 between polyacrylic acid and polyvinyl alcohol.

The invention will now be illustrated with reference to the following Examples which are not intended to limit the scope of the claims.

In the Examples, the following materials were used. Polyacrylic acid ($M_w$ 450 kDa, Cat. 181285, Lot. 0461EI-235), polyvinyl alcohol 99+% hydrolyzed ($M_w$ 160 kDa, Cat. 363065, Lot. 06721PH-278), poly(methyl vinyl ether-alt-maleic anhydride) ($M_w$ 1,080 kDa, Cat. 416320, Lot. 0990IEH), Polyacrylamide-co-acrylic acid ($M_w$ ~5,000 kDa, Cat. 181277, Lot. 09308CD), 2-hydroxyethyl cellulose ($M_w$ 250 kDa, Cat. 308633, Lot. S44007-108), 2-hydroxyethyl cellulose ($M_w$ 750 kDa, Cat. 434973, Lot. 070130H), and tris(2-aminoethyl)amine (Cat. 225630) were all purchased from Aldrich Chemical Company. Polyacrylamide - non-ionic ($M_w$ 5 to 6,000 kDa, Cat. 17042500, Lot. A0262628) was purchased from Acros Organics. Triethanolamine (Cat. T/3150/08, Lot. 0921271) was purchased from Fisher Scientific. Poly vinyl pyrrolidone, sold as Plasdone K-90, ($M_w$ 1,300 kDa, Cat. 1272045, Lot. 03800199538) was purchased from International Speciality Products. All of the reagents were used as received without any further purification (Marked 97 to 99+ % pure).

The solutions used in the Examples were prepared as follows. A mass in grams representing 0.1 mole of polymer (a skilled person would understand that this means that 0.1 moles of polymer repeat unit was used) was dissolved in 100 mL of distilled water to afford 1 mol $dm^{-3}$ solutions. In the case of polyacrylic acid, poly vinyl pyrrolidone, 2-hydroxyethyl cellulose, triethanolamine or tris(2-aminoethyl)amine these solutions were agitated on a tumbling machine for a period of 12 to 18 hours to afford clear viscous solutions. Poly(methyl vinyl ether-alt-maleic anhydride) required similar treatment, the initial white opaque solution turned clear overnight or upon heating. This change is attributed to the opening of the maleic anhydride to afford the poly maleic acid. Polyacrylamide and polyvinyl alcohol required heating to 50 and 85 °C, respectively, for a period of 6 to 18 hours to afford clear viscous solutions.

The invention will now be illustrated with reference to the following Examples which are not intended to limit the scope of the claims. For the polymer systems described in these examples, gel yields and swelling characteristics were determined over a range of temperatures from 80 °C to 200 °C. In general, gel yields tended to decrease at temperatures lower that those illustrated for each example. In some examples degradation of the polymers was observed at temperatures above that given in the example. Equilibrium swelling degree is also found to vary with irradiation temperature.

**Table 1**

Summary of irradiation temperatures, gel yields and equilibrium swelling degree (ESD) for the polymer systems illustrated in Examples 1-8.

| Polymer systems | Ratio | Irradiation temperature (oC) | Gel Yield (%) | ESD | Example |
|---|---|---|---|---|---|
| pVA + pAA | 1.2:0.8 | 160 | 57.0 | 121 | 1 |
| pMVEMA + pVA | 1:1 | 100 | 83.0 | 569 | 2 |
| pMVEMA + HEC | 1:1 | 150 | 42.0 | 35 | 3 |
| pAAM + pAA | 1:1 | 135 | 11.8 | 1146 | 4 |
| p(AAM-co-AA) | - | 135 | 1.0 | 78 | 5 |
| pAAM | - | 135 | 2.0 | 165 | 6 |
| pVP + pVA | 1:1 | 150 | 60.0 | 123 | 7 |
| pAA + TEA | 1:1 | 135 | 1.3 | 2462 | 8 |

## Example 1

4.4 % w/v solution of polyvinyl alcohol (160 kDa, 99 % hydrolysis) was prepared by dissolving 52.8 mg of the polymer in 1.2 mL deionised water at 85 °C for 18 hours. 7.2 % w/v solution of polyacrylic acid (450 kDa) was prepared by dissolving 57.6 mg of the polymer in 0.8 mL deionised water and stirring at room temperature for 18 hours. These solutions were added to a 10 mL CEM pressure vessel, sealed with a CEM septa and then mixed thoroughly for a period of 12 hours using a tumbling machine. The solution mixture was then irradiated in the vessel with 200 W of microwave radiation for a period of 20 minutes at 160 °C and with a pressure cut off of 13.8 bar [200 psi]. This mixture was then poured into a beaker and deionised water (200 mL) was added, this water was then replaced every two days for a period

of 6 days. After this, the hydrogel was filtered, the excess water was removed with a filter paper, and the swollen sample was weighed. The swollen hydrogel was then dried using a freeze dryer and the solid polymer mass assessed. Dry yield: 66 mg, 57 %. The equilibrium swelling degree (ESD) of hydrogels was calculated by the following equation (1):

$$ESD = (W_s - W_d) / W_d \quad (1)$$

wherein $W_s$ and $W_d$ are the weights (g) of the swollen and dry gel respectively.

The equilibrium swelling degree shows the amount of water absorbed by dry cross-linked polymer. The ESD of the hydrogel synthesised in this example was found to be around 121, which means that 121 g of water is taken by 1 g of dry material.

**Example 2**

17.4 % w/v solution of poly(methyl vinyl ether-alt-maleic anhydride) (1,080 kDa) was prepared by dissolving 174 mg of the polymer in 1 mL distilled water and agitating on a tumbling machine in a water bath at 40°C for 18 hours. The initial white opaque solution turned clear overnight. This change is attributed to the opening of the maleic anhydride to afford the poly(maleic acid) (thus a skilled person would understand that the maleic anhydride groups of the poly(methyl vinyl ether-alt-maleic anhydride) had been ring-opened to give maleic acid groups). 4.4 % w/v solution of polyvinyl alcohol (160 kDa, 99 % hydrolysis) was prepared by dissolving 44 mg of the polymer in 1 mL deionised water at 85 °C for 18 hours. These solutions were added to a 10 mL CEM pressure vessel, sealed with a CEM septa and then mixed thoroughly for a period of 12 hours using a tumbling machine. The solution mixture was then irradiated in the vessel with 200 W of microwave radiation for a period of 20 minutes at 100 oC and with a pressure cut off of 13.8 bar [200 psi]. This mixture was then poured into a beaker and deionised water (200 mL) was added, this water was then replaced every two days for a period of 6 days. After this, the hydrogel was filtered, the excess water was removed with a filter paper, and the swollen sample was weighed. The swollen hydrogel was then dried using a freeze dryer and the solid polymer mass assessed. Dry yield: 150 mg , 83 %; ESD = 569.

**Example 3**

17.4 % w/v solution of poly(methyl vinyl ether-alt-maleic anhydride) (1,080 kDa) was prepared by dissolving 174 mg of the polymer in 1 mL distilled water and agitating in a water bath at 40°Con a tumbling machine for 18 hours at room temperature. (As a skilled person would understand that this step is carried out as for Example 2 to ring-open the maleic anhydride groups of the poly(methyl vinyl ether-alt-maleic anhydride) to give maleic acid groups). 5.0 % w/v solution of 2-hydroxyethyl cellulose (250 kDa) was prepared by dissolving 50 mg of the polymer in 1 mL deionised water at room temperature and agitating on a tumbling machine for a period of 18 hours to afford clear viscous liquid. These solutions were added to a 10 mL CEM pressure vessel, sealed with a CEM septa and then mixed thoroughly for a period of 12 hours using a tumbling machine. The solution mixture was then irradiated in the vessel with 200 W of microwave radiation for a period of 20 minutes at 150 oC and with a pressure cut off of 13.8 bar [200 psi]. This mixture was then poured into a beaker and deionised water (200 mL) was added, this water was then replaced every two days for a period of 6 days. After this, the hydrogel was filtered, the excess water was removed with a filter paper, and the swollen sample was weighed. The swollen hydrogel was then dried using a freeze dryer and the solid polymer mass assessed. Dry yield: 46.4 mg, 42 %; ESD = 35.

**Example 4**

2.5 % w/v solution of polyacrylamide (5000-6000 kDa) was prepared by dissolving 25 mg of the polymer in 1 mL deionised water and agitating on a tumbling machine for 18 hours at room temperature. 7.2 % w/v solution of polyacrylic acid (450 kDa) was prepared by dissolving 72 mg of the polymer in 1 mL deionised water and stirring at room temperature for 18 hours. These solutions were added to a 10 mL CEM pressure vessel, sealed with a CEM septa and then mixed thoroughly for a period of 12 hours using a tumbling machine. The solution mixture was then irradiated in the vessel with 200 W of microwave radiation for a period of 20 minutes at 150 oC and with a pressure cut off of 13.8 bar [200 psi]. This mixture was then poured into a beaker and deionised water (200 mL) was added, this water was then replaced every two days for a period of 6 days. After this, the hydrogel was filtered, the excess water was removed with a filter paper, and the swollen sample was weighed. The swollen hydrogel was then dried using a freeze dryer and the solid polymer mass assessed. Dry yield: 16.8 mg, 11.8 %; ESD = 1146.

**Example 5**

14.3 % w/v solution of poly(acrylamide-co-acrylic acid) (~5000 kDa) was prepared by dissolving 286 mg of the polymer in 2 mL deionised water and agitating on a tumbling machine for 18 hours at room temperature. This solution was added to a 10 mL CEM pressure vessel, sealed with a CEM septa and was then irradiated in the vessel with 200 W of microwave radiation for a period of 20 minutes at 135 oC and with a pressure cut off of 13.8 bar [200 psi]. This mixture was then poured into a beaker and deionised water (200 mL) was added, this water was then replaced every two days for a period of 6 days. After this, the hydrogel was filtered, the excess water was removed with a filter paper, and the swollen sample was weighed. The swollen hydrogel was then dried using a freeze dryer and the solid polymer mass assessed. Dry yield: 2 mg, l %; ESD = 78.

**Example 6**

14.3 % w/v solution of poly(acrylamide-co-acrylic acid) (~5000 kDa) was prepared by dissolving 143 mg of the polymer in 1 mL deionised water and agitating on a tumbling machine for 18 hours at room temperature. 14.9 % w/v solution was prepared by dissolving 149 mg of triethanolamine in 1 mL and stirring for 1 hour at room temperature. These solutions were added to a 10 mL CEM pressure vessel, sealed with a CEM septa and then mixed thoroughly for a period of 12 hours using a tumbling machine. The solution mixture was then irradiated in the vessel with 200 W of microwave radiation for a period of 20 minutes at 135 oC and with a pressure cut off of 13.8 bar [200 psi]. This mixture was then poured into a beaker and deionised water (200 mL) was added, this water was then replaced every two days for a period of 6 days. After this, the hydrogel was filtered, the excess water was removed with a filter paper, and the swollen sample was weighed. The swollen hydrogel was then dried using a freeze dryer and the solid polymer mass assessed. Dry yield: 26 mg, 9 %; ESD = 1281.

**Example 7**

11.1 % w/v solution of polyvinyl pyrrolidone (Plasdone K-90, 1300 kDa) was prepared by dissolving 111 mg of the polymer in 1 mL deionised water and agitating on a tumbling machine for 18 hours at room temperature. 4.4 % w/v solution of polyvinyl alcohol (160 kDa, 99 % hydrolysis) was prepared by dissolving 44 g of the polymer in 1 mL deionised water at 85 °C for 18 hours. These solutions were added to a 10 mL CEM pressure vessel, sealed with a CEM septa and then mixed thoroughly for a period of 12 hours using a tumbling machine. The solution mixture was then irradiated in the vessel with 200 W of microwave radiation for a period of 20 minutes at 150 °C and with a pressure cut off of 13.8 bar [200 psi]. This mixture was then poured into a beaker and deionised water (200 mL) was added, this water was then replaced every two days for a period of 6 days. After this, the hydrogel was filtered, the excess water was removed with a filter paper, and the swollen sample was weighed. The swollen hydrogel was then dried using a freeze dryer and the solid polymer mass assessed. Dry yield: 93 mg, 60 %; ESD = 123.

**Example 8**

7.2 % w/v solution of polyacrylic acid (450 kDa) was prepared by dissolving 57.6 mg of the polymer in 0.8 mL deionised water and stirring at room temperature for 18 hours. 14.9 % w/v solution was prepared by dissolving 149 mg of triethanolamine in 1 mL and stirring for 1 hour at room temperature. These solutions were added to a 10 mL CEM pressure vessel, sealed with a CEM septa and then mixed thoroughly for a period of 12 hours using a tumbling machine. The solution mixture was then irradiated in the vessel with 200 W of microwave radiation for a period of 20 minutes at 150 °C and with a pressure cut off of 13.8 bar [200 psi]. This mixture was then poured into a beaker and deionised water (200 mL) was added, this water was then replaced every two days for a period of 6 days. After this, the hydrogel was filtered, the excess water was removed with a filter paper, and the swollen sample was weighed. The swollen hydrogel was then dried using a freeze dryer and the solid polymer mass assessed. Dry yield: 2.7 mg, 1.3 %; ESD = 2462.

**Example 9**

17.4 % w/v solution of poly(methyl vinyl ether-alt-maleic anhydride) (1,080 kDa) was prepared by dissolving 174 mg of the polymer in 1 mL distilled water and agitating in a water bath at 40°C for 18 hours. The initial white opaque solution turned clear overnight. This change is attributed to the opening of the maleic anhydride groups of the poly(methyl vinyl ether-alt-maleic anhydride) to give maleic acid groups. 4.4 % w/v solution of polyvinyl alcohol (160 kDa, 99% hydrolysis) was prepared by dissolving 44 mg of the polymer in 1 mL deionised water at 85°C for 18 hours. These solutions were added to a Hungate tube, sealed and then mixed thoroughly for a period of 12 hours using a tumbling machine. The solution mixture was then placed in a Priorclave Tactrol 2 autoclave, heated to 120°C and held at 120°C

for 15 minutes. This mixture was then poured into a beaker and deionised water (200 mL) was added, this water was then replaced every two days for a period of 6 days. After this, the hydrogel was filtered, the excess water was removed with a filter paper, and the swollen sample was weighed. The swollen hydrogel was then dried using a freeze dryer and the solid polymer mass assessed. Dry yield: 154 mg, 70.5 %; ESD = 613.

**Example 10**

4.4 % w/v solution of polyvinyl alcohol (160 kDa, 99 % hydrolysis) was prepared by dissolving 52.8 mg of the polymer in 1.2 mL deionised water at 85°C for 18 hours. 7.2 % w/v solution of polyacrylic acid (450 kDa) was prepared by dissolving 57.6 mg of the polymer in 0.8 mL deionised water and stirring at room temperature for 18 hours. These solutions were added to a 35 mL ACE pressure cell, sealed with the threaded lid provided with this cell and then mixed thoroughly for a period of 12 hours using a tumbling machine. The solution mixture was then heated to 150°C in a sand bath on a hot plate for one hour. This mixture was then poured into a beaker and deionised water (200 mL) was added, this water was then replaced every two days for a period of 6 days. After this, the hydrogel was filtered, the excess water was removed with a filter paper, and the swollen sample was weighed. The swollen hydrogel was then dried using a freeze dryer and the solid polymer mass assessed. Dry yield: 11 mg, 10%. This experiment was undertaken to show that systems such as PVA/PAA, that require a higher temperature than can be obtained in the available autoclave, can be used to produce hydrogels in the absence of microwaves as well as in the presence of microwaves.

**Example 11**

17.4 % w/v solution of poly(methyl vinyl ether-alt-maleic anhydride) (1,080 kDa) was prepared by dissolving 174 mg of the polymer in 1 mL distilled water and agitating in a water bath at 40°C for 18 hours. The initial white opaque solution turned clear overnight. This change is attributed to the opening of the maleic anhydride groups of the poly(methyl vinyl ether-alt-maleic anhydride) to give maleic acid groups. 4.4 % w/v solution of polyvinyl alcohol (160 kDa, 99% hydrolysis) was prepared by dissolving 44 mg of the polymer in 1 mL deionised water at 85°C: for 18 hours. These solutions were added to a glass vial and then mixed thoroughly for a period of 12 hours using a tumbling machine. The vial was then opened and placed on a raised platform in a Morphy Richards 48815 pressure cooker with approximately 2 inches of distilled water below the platform. The pressure cooker was used to apply a temperature of 120°C for 30 minutes. When a pressure cooker is used, the pressure is kept constant by periodic venting. As the vial is not sealed, the water content of the mixture decreases throughout the reaction as it is lost as steam during venting. The resulting hydrogel is thus partially dehydrated, unlike the hydrogels formed in sealed containers in a microwave or autoclave. This mixture was then poured into a beaker and deionised water (200 mL) was added, this water was then replaced every two days for a period of 6 days. After this, the hydrogel was filtered, the excess water was removed with a filter paper, and the swollen sample was weighed. The swollen hydrogel was then dried using a freeze dryer and the solid polymer mass assessed. Dry yield: 96.6 mg, 44 %; ESD = 930.

**Example 12**

17.4 % w/v solution of poly(methyl vinyl ether-alt-maleic anhydride) (1,080 kDa) was prepared by dissolving 174 mg of the polymer in 1 mL distilled water and agitating in a water bath at 40°C for 18 hours. The initial white opaque solution turned clear overnight. This change is attributed to the opening of the maleic anhydride groups of the poly(methyl vinyl ether-alt-maleic anhydride) to give maleic acid groups. 2.5 % w/v solution of 2-hydroxyethylcellulose (250 kDa) was prepared by dissolving 25 mg of the polymer in 1 mL deionised water. These solutions were added to a glass vial and then mixed thoroughly for a period of 12 hours using a tumbling machine. The vial was then placed on a raised platform in a Morphy Richards 48815 pressure cooker with approximately 2 inches of distilled water below the platform. The pressure cooker was used to apply a temperature of 120°C for 30, 90 or 180 minutes. This mixture was then poured into a beaker and deionised water (200 mL) was added, this water was then replaced every two days for a period of 6 days. After this, the hydrogel was filtered, the excess water was removed with a filter paper, and the swollen sample was weighed. The swollen hydrogel was then dried using a freeze dryer and the solid polymer mass assessed.

**Table 2**

| Yield and ESD values for hydrogels synthesised in example 12. | | | |
|---|---|---|---|
| **Set Heating Time / min** | **Dry Yield / mg** | **Dry Yield / %** | **ESD** |
| 30 | 18.4 | 8.2 | 1113 |
| 90 | 110 | 49.1 | 980 |

(continued)

| Yield and ESD values for hydrogels synthesised in example 12. | | | |
|---|---|---|---|
| **Set Heating Time / min** | **Dry Yield / mg** | **Dry Yield / %** | **ESD** |
| 180 | 130 | 58.0 | 767 |

**Example 13**

7.2 % w/v solution of poly(acrylic acid) (450 kDa) was prepared by dissolving 72 mg of the polymer in 1 mL distilled water and stirring at room temperature for 18 hours. 14.6 % w/v solution of tris(2-aminoethyl)amine was prepared by dissolving 146 mg of the compound in 1 mL distilled water. These solutions were added to a 25 mL CEM pressure vessel, sealed with a CEM septum and then mixed thoroughly for a period of 12 hours using a tumbling machine. The solution mixture was then irradiated in the vessel with 200 W of microwave radiation for a period of 20 minutes at 140°C and with a pressure cut off of 13.8 bar [200 psi]. This mixture was then poured into a beaker and deionised water (200 mL) was added, this water was then replaced every two days for a period of 6 days. After this, the hydrogel was filtered, the excess water was removed with a filter paper, and the swollen sample was weighed. The swollen hydrogel was then dried using a freeze dryer and the solid polymer mass assessed. Dry yield: 166 mg, 76%; ESD = 5.

**Example 14**

7.2 % w/v solution of poly(acrylic acid) (450 kDa) was prepared by dissolving 72 mg of the polymer in 1 mL distilled water and stirring at room temperature for 18 hours. 9.2 % w/v solution of glycerol was prepared by dissolving 92 mg of the compound in I mL distilled water. These solutions were added to a 25 mL CEM pressure vessel, sealed with a CEM septum and then mixed thoroughly for a period of 12 hours using a tumbling machine. The solution mixture was then irradiated in the vessel with 200 W of microwave radiation for a period of 20 minutes at 150°C and with a pressure cut off of 13.8 bar [200 psi]. This mixture was then poured into a beaker and deionised water (200 mL) was added, this water was then replaced every two days for a period of 6 days. After this, the hydrogel was filtered, the excess water was removed with a filter paper, and the swollen sample was weighed. The swollen hydrogel was then dried using a freeze dryer and the solid polymer mass assessed. Dry yield: 68 mg , 41.2 %; ESD = 4.7.

**Example 15**

7.2 % w/v solution of poly(acrylic acid) (450 kDa) was prepared by dissolving 72 mg of the polymer in 1 mL distilled water and stirring at room temperature for 18 hours. 10.6 % w/v solution of diethylene glycol was prepared by dissolving 106 mg of the compound in 1 mL distilled water. These solutions were added to a 25 mL CEM pressure vessel, sealed with a CEM septum and then mixed thoroughly for a period of 12 hours using a tumbling machine. The solution mixture was then irradiated in the vessel with 200 W of microwave radiation for a period of 20 minutes at 150°C and with a pressure cut off of 13.8 bar [200 psi]. This mixture was then poured into a beaker and deionised water (200 mL) was added, this water was then replaced every two days for a period of 6 days. After this, the hydrogel was filtered, the excess water was removed with a filter paper, and the swollen sample was weighed. The swollen hydrogel was then dried using a freeze dryer and the solid polymer mass assessed. Dry yield: 19 mg , 10.5 %; ESD = 307.

## Claims

**1.** A method for preparing a hydrogel from a hydrophilic polymer having one or more functional groups which are capable of co-reacting in a condensation reaction which method comprises the steps of:

(i) preparing a solution of the polymer;
(ii) heating the solution to a temperature sufficient for the condensation reaction to take place for a period of time sufficient for the hydrogel to cross-link wherein where the hydrophilic polymer comprises a first and a second hydrophilic polymer, step (i) comprises a step of mixing the hydrophilic polymers to prepare a homogeneous intimate mixture of the polymers; and wherein the heating step (ii) is carried out at a pressure greater than atmospheric pressure.

**2.** A method as defined in claim 1 wherein the hydrophilic polymer is a single multifunctional hydrophilic polymer which

comprises two or more functional groups which are capable of co-reacting in a condensation reaction.

3. A method as defined in claim 1 wherein the hydrophilic polymer comprises two or more hydrophilic polymers wherein each of which comprises one or more functional groups which groups are capable of co-reacting in a condensation reaction; preferably the hydrophilic polymer comprises a first and a second hydrophilic polymer wherein the first hydrophilic polymer has a first functional group and the second hydrophilic polymer has a second functional group wherein the first and the second functional groups are capable of co-reacting in a condensation reaction.

4. A method as defined in any one of the preceding claims wherein the hydrophilic polymer comprises a hydrophilic polymer having one or more functional groups and a condensation monomer having one or more functional groups wherein the functional groups are capable of co-reacting in a condensation reaction; preferably the hydrophilic polymer has one or more first functional groups and the condensation monomer has one or more second functional groups wherein the first and the second functional groups are capable of co-reacting in a condensation reaction.

5. A method as defined in claim 1, claim 3 or claim 4 wherein the mixing step is carried out for from 1 to 36 hours.

6. A method as defined in any one of claims 2 to 5 wherein the two or more functional groups which are capable of co-reacting in a condensation reaction include a first functional group and a second functional group wherein
the first functional group includes an alcohol, a carbonyl, and/or an ester group, preferably a saturated or unsaturated carbon chain which is substituted by one or more hydroxyl, carbonyl and/or carboxylic ester groups; and
the second functional group includes an amide group, a carboxylic acid group, a carbonyl group and/or a carboxylic ester group, preferably a saturated or unsaturated carbon chain which is substituted by one or more amide, carboxylic acid, carbonyl and/or carboxylic ester groups.

7. A method as defined in any one of claims 3 to 6 wherein the hydrophilic polymer comprises two or more hydrophilic polymers, the hydrophilic polymers are two or more of polyvinyl alcohol (PVA), polyacrylic acid (PAA), poly (methyl ether-*alt*-maleic anhydride) (pMVEMA), polyvinylpyrrolidone (pVP), 2-hydroxyethyl cellulose (HEC) and polyacrylamide (pAAM).

8. A method as defined in any one of claims 3 to 7 wherein the hydrophilic polymer is one or more of the following systems:

(i) a system for forming a hydrogel by cross-linking polyvinyl alcohol and polyacrylic acid (pVA + pAA):

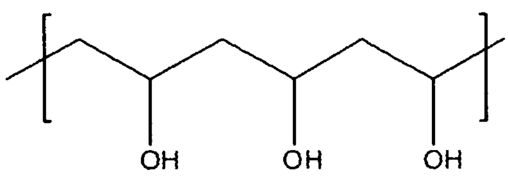

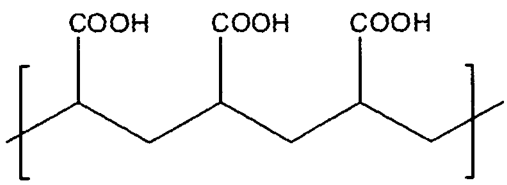

(ii) a system for forming a hydrogel by cross-linking polyacrylamide and polyacrylic acid (pAAM + pAA):

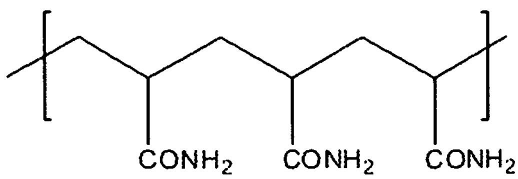

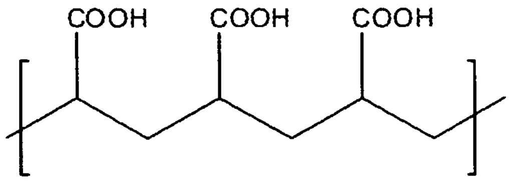

(iii) a system for forming a hydrogel by cross-linking polyvinyl alcohol and poly(methyl vinyl ether-alt-maleic anhydride) (pVA + pMVEMA):

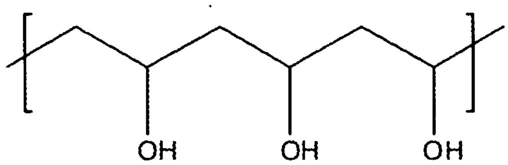

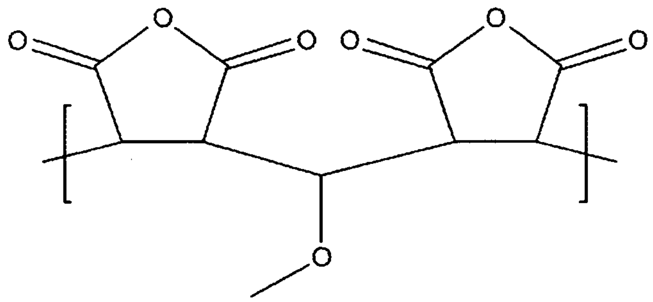

(iv) a system for forming a hydrogel by cross-linking polyvinyl alcohol and polyvinyl pyrrolidone (pVA + pVP):

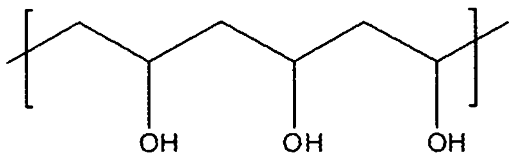

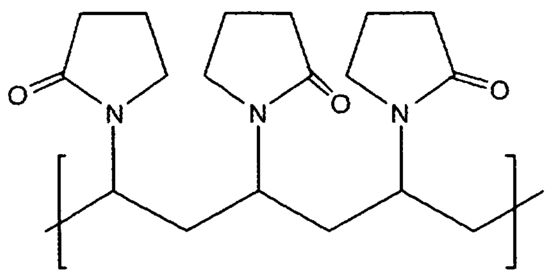

(v) a system for forming a hydrogel by cross-linking poly(acrylamide-co-acrylic acid) (p(AAM-co-AA)):

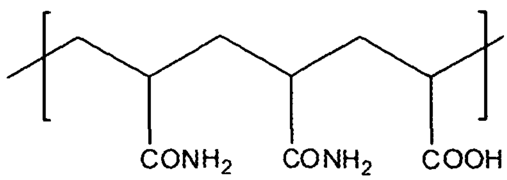

(vi) a system for forming a hydrogel by cross-linking polyacrylamide (pAAM):

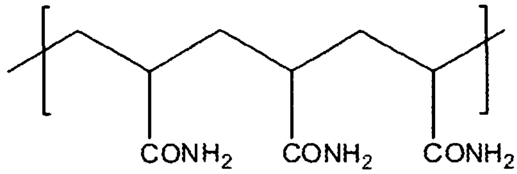

(vii) a system for forming a hydrogel by cross-linking hydroxyethyl cellulose and poly(methyl vinyl ether-alt-maleic anhydride) (HEC + pMVEMA):

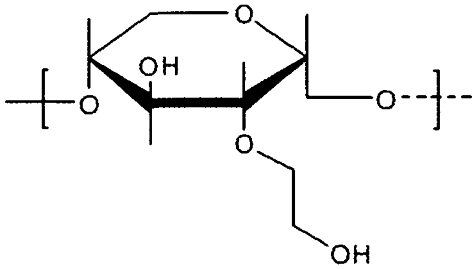

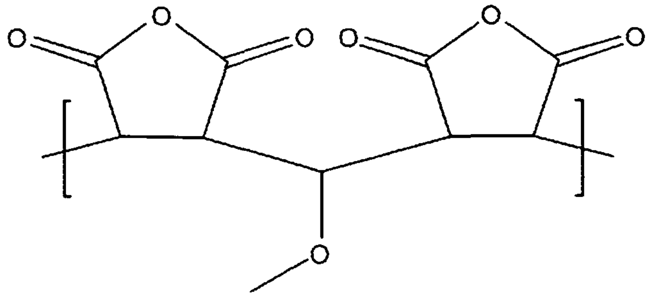

(viii) a system for forming a hydrogel by cross-inking Dextran and poly(methyl vinyl ether-alt-maleic anhydride) (pMVEMA):

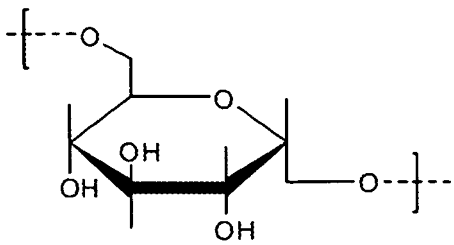

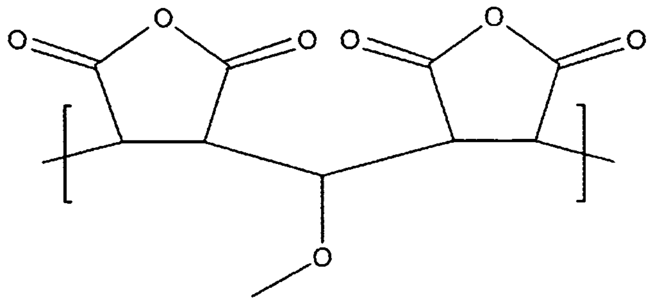

(ix) a system for forming a hydrogel by cross-linking polyacrylic acid and triethylamine (pAA + TEA):

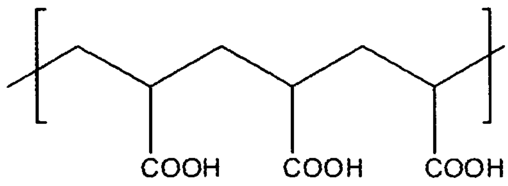

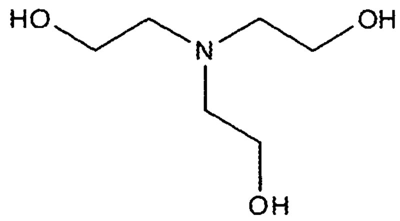

(x) a system for forming a hydrogel by cross-linking polyacrylic acid and tris(2-aminoethyl)amine (pAA + TREN):

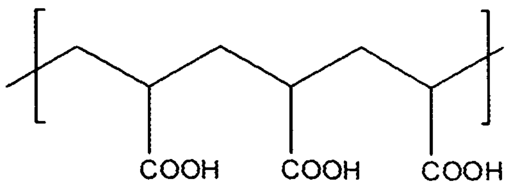

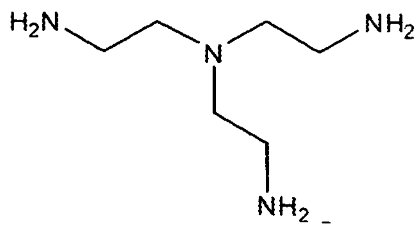

and/or (xi) a system for forming a hydrogel by cross-linking polyacrylic acid (pAA) and glycerol or ethylene glycol:

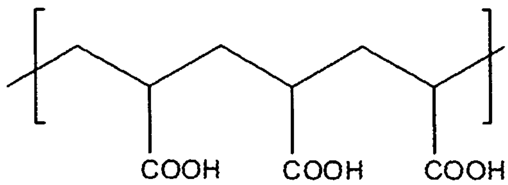

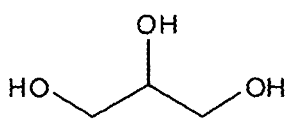

OR

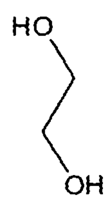

**9.** A method as defined in any one of claims 3 to 8 wherein the molar ratio of the first hydrophilic polymer to the second hydrophilic polymer or to the condensation monomer is at least 1:1, preferably the molar ratio is in a range of from

1:1 to 2:1, more preferably about 1.5:1.

**10.** A method as defined in claim 2 or claim 6 (where it is dependent on claim 2) wherein the hydrophilic polymer is polyacrylamide-*co*-acrylic acid and/or polyacrylamide.

**11.** A method as defined in any one of the preceding claims wherein step (ii) is carried out for from 10 to 60 minutes, preferably from 15 to 40 minutes.

**12.** A method as defined in any one of the preceding claims wherein step (ii) is carried out with microwave radiation of sufficient intensity to heat the solution to a temperature of from 100 to 170°C, preferably a temperature of from 140 to 160°C.

**13.** A method as defined in any one of the preceding claims wherein the solution of the polymer used in step (ii) has one or more of the following features:

(a) the solution is a non-dried solution;
(b) the concentration of the polymer in the solution is from 0.5 mole of repeat unit per litre to about 2 mole of repeat unit per litre; and/or
(c) the concentration of the polymer in the solution is from 0.1 wt%, preferably from 0.5 wt% to the normal solubility limit of the polymer, preferably to 50 wt%, preferably to 30 wt%, preferably to 20 wt%.

**14.** A method as defined in any one of the preceding claims wherein step (ii) is carried out at a pressure of from 103 kPa to 1380kPa.

**Patentansprüche**

**1.** Verfahren zur Herstellung eines Hydrogels aus einem hydrophilen Polymer mit einer oder mehreren funktionellen Gruppen, die in der Lage sind, in einer Kondensationsreaktion gemeinsam zu reagieren, wobei das Verfahren die folgenden Schritte umfasst:

(i) Herstellen einer Lösung aus dem Polymer;
(ii) Erwärmen der Lösung auf eine Temperatur, die hoch genug ist, damit die Kondensationsreaktion stattfinden kann, für einen Zeitraum, der lang genug ist, damit sich das Hydrogel vernetzen kann, wobei dann, wenn das hydrophile Polymer ein erstes und ein zweites hydrophiles Polymer umfasst, Schritt (i) einen Schritt des Mischens der hydrophilen Polymere umfasst, um eine homogene, innige Mischung aus den Polymeren herzustellen; und wobei der Schritt des Erwärmens (ii) bei einem Druck ausgeführt wird, der höher ist als Atmosphärendruck.

**2.** Verfahren nach Anspruch 1, wobei das hydrophile Polymer ein einzelnes multifunktionelles hydrophiles Polymer ist, das zwei oder mehr funktionelle Gruppen aufweist, die in der Lage sind, in einer Kondensationsreaktion gemeinsam zu reagieren.

**3.** Verfahren nach Anspruch 1, wobei das hydrophile Polymer zwei oder mehr hydrophile Polymere umfasst, von denen jedes eine oder mehrere funktionelle Gruppen aufweist, wobei diese Gruppen in der Lage sind, in einer Kondensationsreaktionsreaktion gemeinsam zu reagieren; wobei das hydrophile Polymer vorzugsweise ein erstes und ein zweites hydrophiles Polymer umfasst, wobei das erste hydrophile Polymer eine erste funktionelle Gruppe aufweist und das zweite hydrophile Polymer eine zweite funktionelle Gruppe aufweist, wobei die ersten und zweiten funktionellen Gruppen in der Lage sind, in einer Kondensationsreaktion gemeinsam zu reagieren.

**4.** Verfahren nach einem der vorangehenden Ansprüche, wobei das hydrophile Polymer ein hydrophiles Polymer mit einer oder mehreren funktionellen Gruppen und ein Kondensationsmonomer mit einer oder mehreren funktionellen Gruppen umfasst, wobei die funktionellen Gruppen in der Lage sind, in einer Kondensationsreaktion gemeinsam zu reagieren; wobei das hydrophile Polymer vorzugsweise eine oder mehrere funktionelle Gruppen aufweist und das Kondensationsmonomer eine oder mehrere zweite funktionelle Gruppen aufweist, wobei die ersten und zweiten funktionellen Gruppen in der Lage sind, in einer Kondensationsreaktion gemeinsam zu reagieren.

**5.** Verfahren nach Anspruch 1, Anspruch 3 oder Anspruch 4, wobei der Schritt des Mischens für 1 bis 36 Stunden durchgeführt wird.

**6.** Verfahren nach einem der Ansprüche 2 bis 5, wobei die zwei oder mehr funktionellen Gruppen, die in der Lage sind, in einer Kondensationsreaktion gemeinsam zu reagieren, eine erste funktionelle Gruppe und eine zweite funktionelle Gruppe aufweisen, wobei
die erste funktionelle Gruppe eine Alkohol-, eine Carbonyl- und/oder eine Estergruppe beinhaltet, vorzugsweise eine gesättigte oder ungesättigte Kohlenstoffkette, die durch eine oder mehrere Hydroxyl-, Carbonyl- und/oder Carboxylestergruppen substituiert ist; und
die zweite funktionelle Gruppe eine Amidgruppe, eine Carbonsäuregruppe, eine Carbonylgruppe und/oder eine Carboxylestergruppe beinhaltet, vorzugsweise eine gesättigte oder ungesättigte Kohlenstoffkette, die durch eine oder mehrere Amid-, Carbonsäure-, Carbonyl- und/oder Carboxylestergruppen substituiert ist.

**7.** Verfahren nach einem der Ansprüche 3 bis 6, wobei das hydrophile Polymer zwei oder mehr hydrophile Polymere umfasst, wobei die hydrophilen Polymere zwei oder mehr von Polyvinylalkohol (PVA), Polyacrylsäure (PAA), Poly(methylether-*alt*-maleinsäureanhydrid) (pMVEMA), Polyvinylpyrrolidon (pVP), 2-Hydroxyethylcellulose (HEC) und Polyacrylamid (pAAM) sind.

**8.** Verfahren nach einem der Ansprüche 3 bis 7, wobei das hydrophile Polymer eines oder mehrere der folgenden Systeme ist:

(i) ein System zur Bildung eines Hydrogels durch Vernetzen von Polyvinylalkohol und Polyacrylsäure (pVA + pAA):

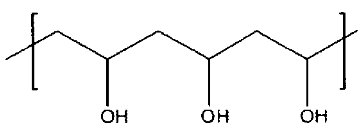

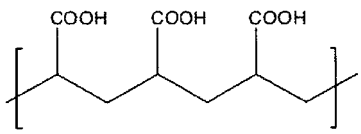

(ii) ein System zur Bildung eines Hydrogels durch Vernetzen von Polyacrylamid und Polyacrylsäure (pAAM + pAA):

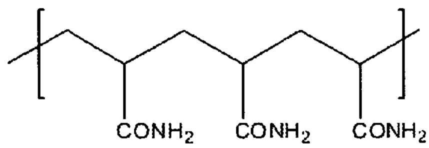

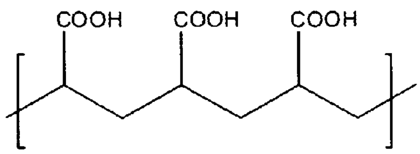

(iii) ein System zur Bildung eines Hydrogels durch Vernetzen von Polyvinylalkohol und Poly(methylvinylether-alt-maleinsäureanhydrid) (pVA + pMVEMA)

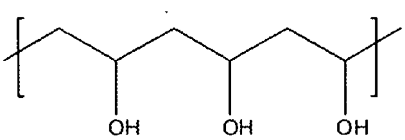

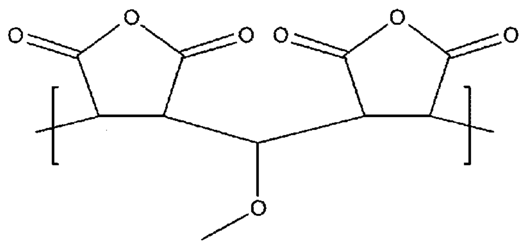

(iv) ein System zur Bildung eines Hydrogels durch Vernetzen von Polyvinylalkohol und Polyvinylpyrrolidon (pVA + pVP):

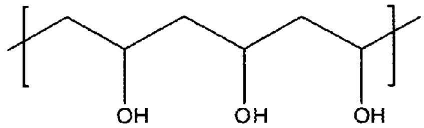

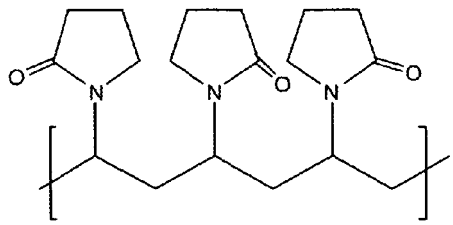

(v) System zur Bildung eines Hydrogels durch Vernetzen von Poly(acrylamid-co-acrylsäure) (p(AAM-co-AA)):

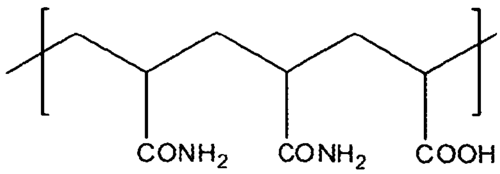

(vi) ein System zur Bildung eines Hydrogels durch Vernetzen von Polyacrylamid (pAAM):

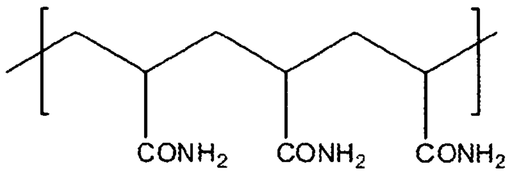

(vii) ein System zur Bildung eines Hydrogels durch Vernetzen von Hydroxyethylcellulose und Poly(methylvinylether-alt-maleinsäureanhydrid) (HEC + pMVEMA):

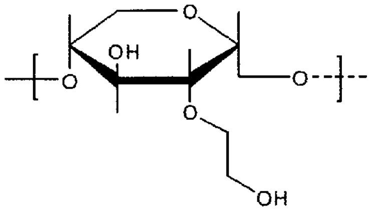

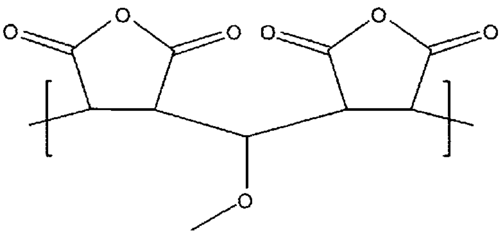

(viii) ein System zur Bildung eines Hydrogels durch Vernetzen von Dextran und Poly(methylvinylether-alt-maleinsäureanhydrid) (pMVEMA):

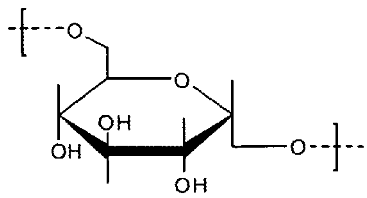

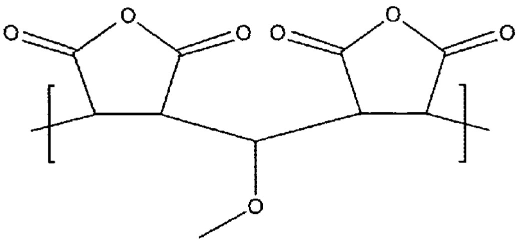

(ix) ein System zur Bildung eines Hydrogels durch Vernetzen von Polyacrylsäure und Triethylamin (pAA + TEA):

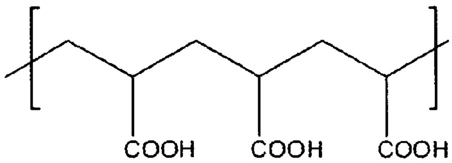

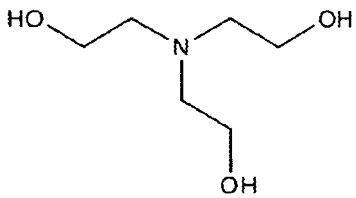

(x) ein System zur Bildung eines Hydrogels durch Vernetzen von Polyacrylsäure und Tris(2-aminoethyl)amin (pAA + TREN):

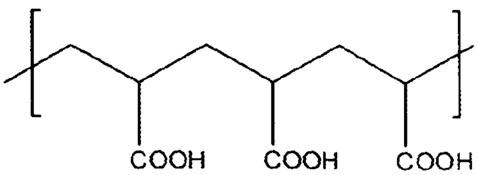

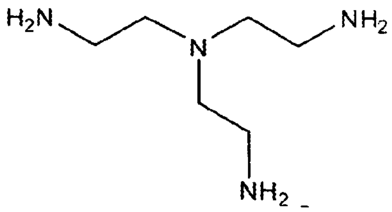

und/oder (xi) ein System zur Bildung eines Hydrogels durch Vernetzen von Polyacrylsäure (pAA) und Glycerol oder Ethylenglycol:

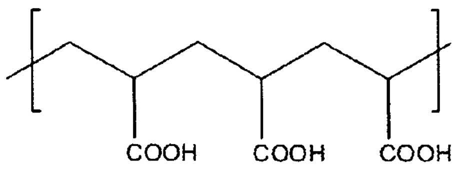

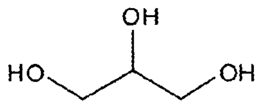

OR

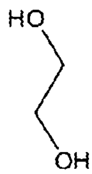

9. Verfahren nach einem der Ansprüche 3 bis 8, wobei das Molverhältnis des ersten hydrophilen Polymers zum zweiten hydrophilen Polymer oder zum Kondensationsmonomer mindestens 1:1 ist, das Molverhältnis vorzugsweise in einem Bereich von 1:1 bis 2:1, vorzugsweise bei etwa 1,5:1 liegt.

10. Verfahren nach Anspruch 2 oder Anspruch 6 (wenn dieser von Anspruch 2 abhängt), wobei das hydrophile Polymer Polyacrylamid-co-acrylsäure und/oder Polyacrylamid ist.

11. Verfahren nach einem der vorangehenden Ansprüche, wobei Schritt (ii) für 10 bis 60 Minuten, vorzugsweise für 15 bis 40 Minuten durchgeführt wird.

12. Verfahren nach einem der vorangehenden Ansprüche, wobei Schritt (ii) mit einer Mikrowellenstrahlung von ausreichender Intensität durchgeführt wird, um die Lösung auf eine Temperatur von 100 bis 170 °C, vorzugsweise auf eine Temperatur von 140 bis 160 °C zu erwärmen.

13. Verfahren nach einem der vorangehenden Ansprüche, wobei die Lösung des Polymers, die in Schritt (ii) verwendet wird, eines oder mehrere der folgenden Merkmale aufweist:

(a) die Lösung ist eine nicht-getrocknete Lösung;
(b) die Konzentration des Polymers in der Lösung liegt bei 0,5 Mol Wiederholungseinheiten pro Liter bis etwa 2 Mol Wiederholungseinheiten pro Liter;
(c) die Konzentration des Polymers in der Lösung ist 0,1 Gew.-%, vorzugsweise von 0,5 Gew.-% bis zur nomalen Löslichkeitsgrenze des Polymers, vorzugsweise bis 50 Gew.-%, vorzugsweise bis 30 Gew.-%, vorzugsweise bis 20 Gew.-%.

14. Verfahren nach einem der vorangehenden Ansprüche, wobei Schritt (ii) bei einem Druck von 103 kPa bis 1380 kPa durchgeführt wird.

## Revendications

1. Un procédé de préparation d'un hydrogel à partir d'un polymère hydrophile possédant un ou plusieurs groupes fonctionnels qui sont capables de co-réagir dans une réaction de condensation, ledit procédé comprenant les

opérations suivantes :

(i) la préparation d'une solution du polymère,
(ii) le chauffage de la solution à une température suffisante pour que la réaction de condensation se déroule pendant une période de temps suffisante pour que l'hydrogel se réticule où, si le polymère hydrophile contient un premier et un deuxième polymères hydrophiles, l'opération (i) comprend une opération de mélange des polymères hydrophiles de façon à préparer un mélange intime et homogène des polymères, et où l'opération de chauffage (ii) est effectuée à une pression supérieure à la pression atmosphérique.

**2.** Un procédé selon la Revendication 1 où le polymère hydrophile est un polymère hydrophile multifonction unique qui comprend deux ou plus groupes fonctionnels qui sont capables de co-réagir dans une réaction de condensation.

**3.** Un procédé selon la Revendication 1 où le polymère hydrophile contient deux ou plus polymères hydrophiles où chacun d'eux contient un ou plusieurs groupes fonctionnels, lesdits groupes étant capables de co-réagir dans une réaction de condensation ; de préférence le polymère hydrophile contient un premier et un deuxième polymères hydrophiles où le premier polymère hydrophile possède un premier groupe fonctionnel et le deuxième polymère hydrophile possède un deuxième groupe fonctionnel, où les premier et deuxième groupes fonctionnels sont capables de co-réagir dans une réaction de condensation.

**4.** Un procédé selon l'une quelconque des Revendications précédentes où le polymère hydrophile contient un polymère hydrophile possédant un ou plusieurs groupes fonctionnels et un monomère de condensation possédant un ou plusieurs groupes fonctionnels où les groupes fonctionnels sont capables de co-réagir dans une réaction de condensation ; de préférence le polymère hydrophile possède un ou plusieurs premiers groupes fonctionnels et le monomère de condensation possède un ou plusieurs deuxièmes groupes fonctionnels où les premiers et les deuxièmes groupes fonctionnels sont capables de co-réagir dans une réaction de condensation.

**5.** Un procédé selon les Revendications 1, 3 ou 4 où l'opération de mélange est effectuée pendant de 1 à 36 heures.

**6.** Un procédé selon l'une quelconque des Revendications 2 à 5 où les deux ou plus groupes fonctionnels qui sont capables de co-réagir dans une réaction de condensation comprennent un premier groupe fonctionnel et un deuxième groupe fonctionnel où
le premier groupe fonctionnel contient un alcool, un carbonyle, et/ou un groupe ester, de préférence une chaîne carbonée saturée ou non saturée qui est substituée par un ou plusieurs groupes hydroxyles, carbonyles et/ou esters carboxyliques, et
le deuxième groupe fonctionnel contient un groupe amide, un groupe acide carboxylique, un groupe carbonyle et/ou un groupe ester carboxylique, de préférence une chaîne carbonée saturée ou non saturée qui est substituée par un ou plusieurs groupes amides, acides carboxyliques, carbonyles et/ou esters carboxyliques.

**7.** Un procédé selon l'une quelconque des Revendications 3 à 6 où le polymère hydrophile contient deux ou plus polymères hydrophiles, les polymères hydrophiles étant deux ou plus éléments parmi alcool polyvinylique (PVA), acide polyacrylique (PAA), poly(méthyle éther-*alt*-anhydride maléique) (pMVEMA), polyvinylepyrrolidone (pVP), 2-hydroxyéthylcellulose (HEC) et polyacrylamide (pAAM).

**8.** Un procédé selon l'une quelconque des Revendications 3 à 7 où le polymère hydrophile est un ou plusieurs des systèmes suivants :

(i) un système destiné à la formation d'un hydrogel par réticulation d'un alcool polyvinylique et d'un acide polyacrylique (pVA + pAA) :

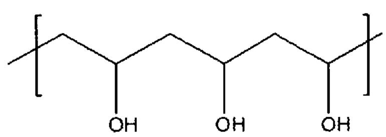

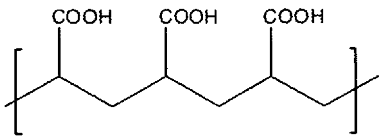

(ii) un système destiné à la formation d'un hydrogel par réticulation d'un polyacrylamide et d'un acide polyacrylique (pAAM + pAA) :

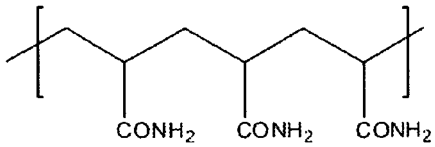

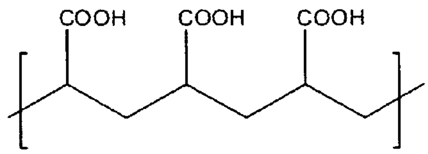

(iii) un système destiné à la formation d'un hydrogel par réticulation d'un alcool polyvinylique et d'un poly(méthyle éther-alt-anhydride maléique) (pVA + pMVEMA) :

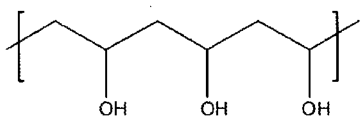

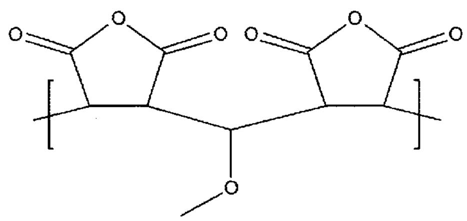

(iv) un système destiné à la formation d'un hydrogel par réticulation d'un alcool polyvinylique et d'un polyvinyle pyrrolidone (pVA + pVP) :

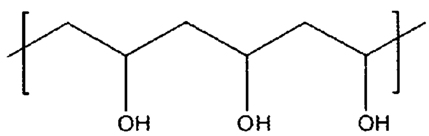

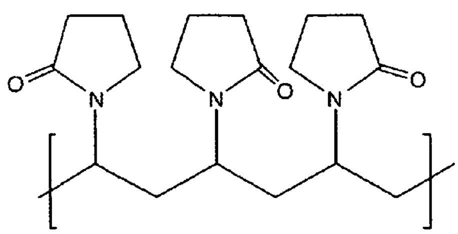

(v) un système destiné à la formation d'un hydrogel par réticulation d'un poly(acrylamide-co-acide acrylique) (p(AAM-co-AA)) :

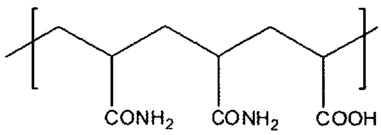

(vi) un système destiné à la formation d'un hydrogel par réticulation d'un polyacrylamide (pMM) :

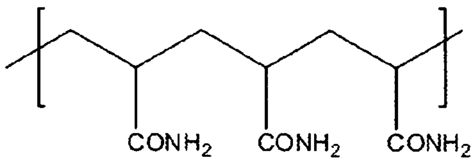

(vii) un système destiné à la formation d'un hydrogel par réticulation d'un hydroxyéthylcellulose et d'un poly(méthyle vinyle éther-alt-anhydride maléique) (HEC + pMVEMA) :

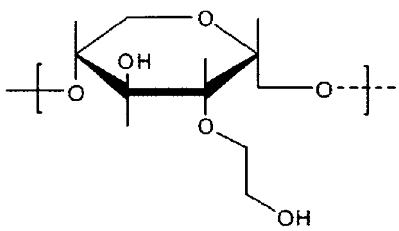

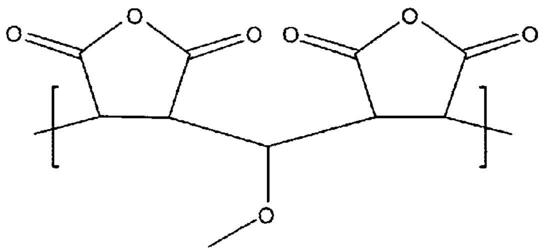

(viii) un système de formation d'un hydrogel par réticulation d'un Dextran et d'un poly(méthyle vinyle éther-alt-anhydride maléique) (pMVEMA) :

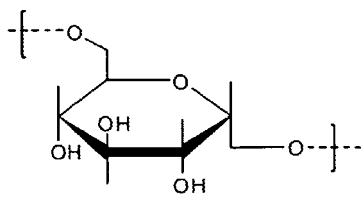

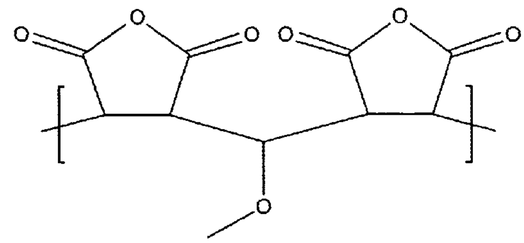

(ix) un système de formation d'un hydrogel par réticulation d'un acide polyacrylique et d'un triéthylamine (pAA + TEA) :

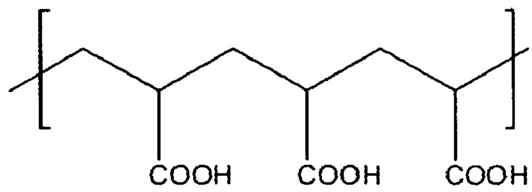

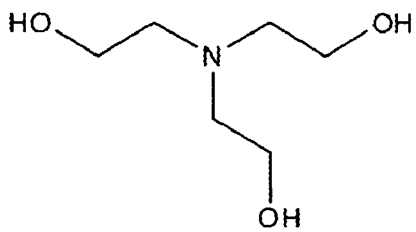

(x) un système de formation d'un hydrogel par réticulation d'un acide polyacrylique et d'un tris(2-aminoéthyle)amine (pAA + TREN) :

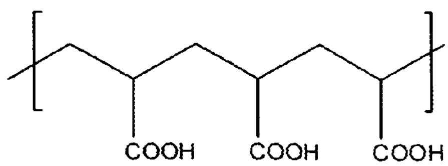

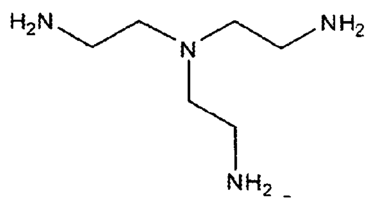

et/ou (xi) un système destiné à la formation d'un hydrogel par réticulation d'un acide polyacrylique (pAA) et d'un glycérol ou d'un éthylène glycol :

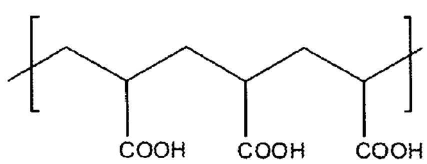

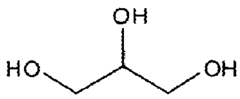

OR

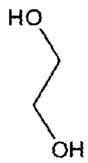

**9.** Un procédé selon l'une quelconque des Revendications 3 à 8 où le rapport molaire du premier polymère hydrophile sur le deuxième polymère hydrophile ou sur le monomère de condensation est au moins de 1:1, de préférence le rapport molaire se situe dans une plage de 1:1 à 2:1, de préférence encore d'environ 1,5:1.

**10.** Un procédé selon la Revendication 2 ou 6 (lorsqu'elle dépend de la Revendication 2) où le polymère hydrophile est un polyacrylamide-co-acide acrylique et/ou un polyacrylamide.

**11.** Un procédé selon l'une quelconque des Revendications précédentes où l'opération (ii) est effectuée pendant de 10 à 60 minutes, de préférence de 15 à 40 minutes.

**12.** Un procédé selon l'une quelconque des Revendications précédentes où l'opération (ii) est effectuée avec un rayonnement hyperfréquence d'une intensité suffisante pour chauffer la solution à une température de 100 à 170°C, de préférence une température de 140 à 160°C.

**13.** Un procédé selon l'une quelconque des Revendications précédentes où la solution du polymère utilisée à l'opération (ii) possède une ou plusieurs des caractéristiques suivantes :

(a) la solution est une solution non séchée,
(b) la concentration du polymère dans la solution est de 0,5 mole d'unité de répétition par litre à environ 2 moles d'unité de répétition par litre, et/ou
(c) la concentration du polymère dans la solution est de 0,1% en poids, de préférence de 0,5% en poids à la limite de solubilité normale du polymère, de préférence à 50% en poids, de préférence à 30% en poids, de préférence à 20% en poids.

**14.** Un procédé selon l'une quelconque des Revendications précédentes où l'opération (ii) est effectuée à une pression de 103 kPa à 1380 kPa.

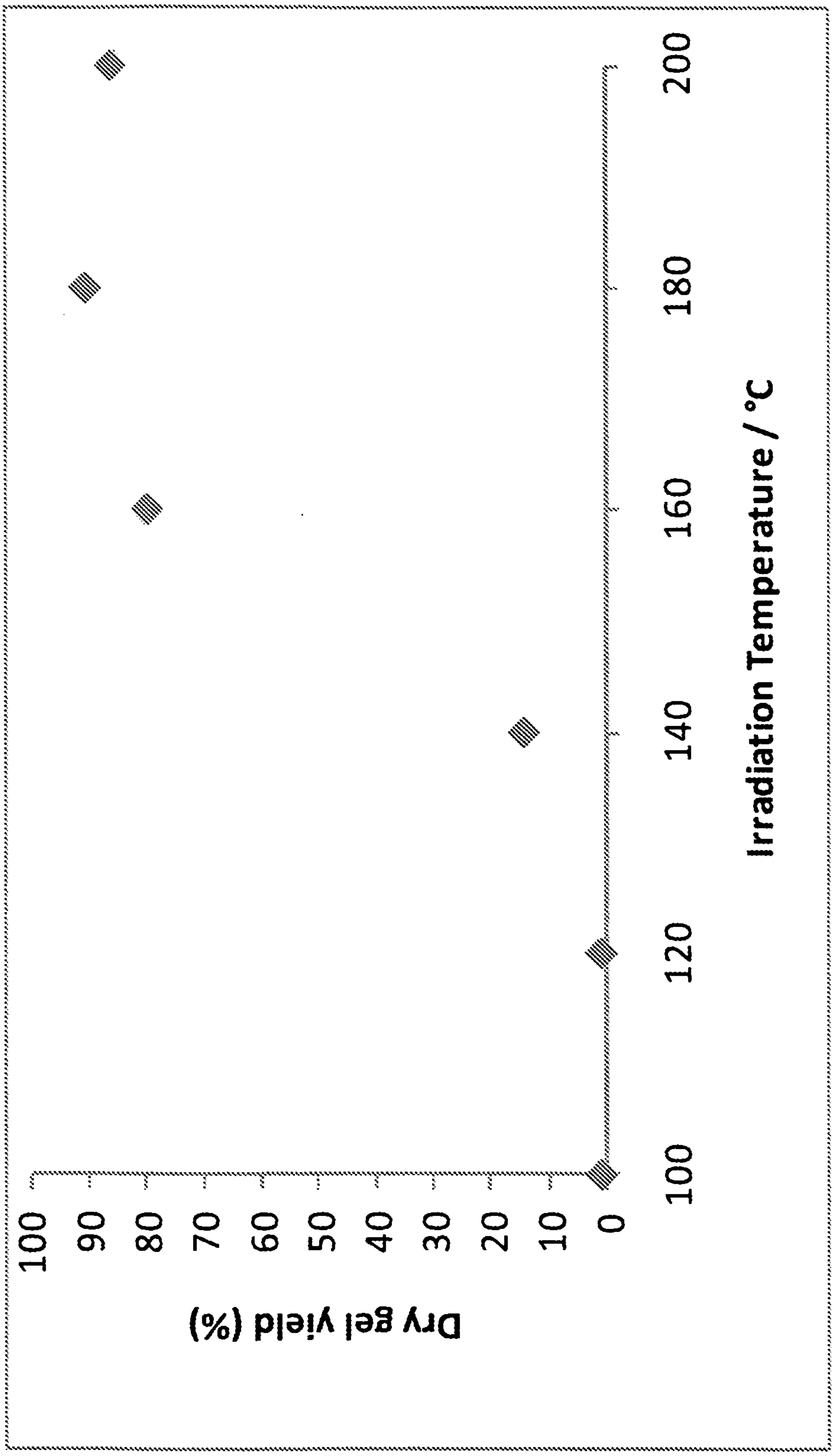
Dry gel yield (%)
0
10
20
30
40
50
60
70
80
90
100
100
120
140
160
180
200
Irradiation Temperature / °C

FIGURE 1

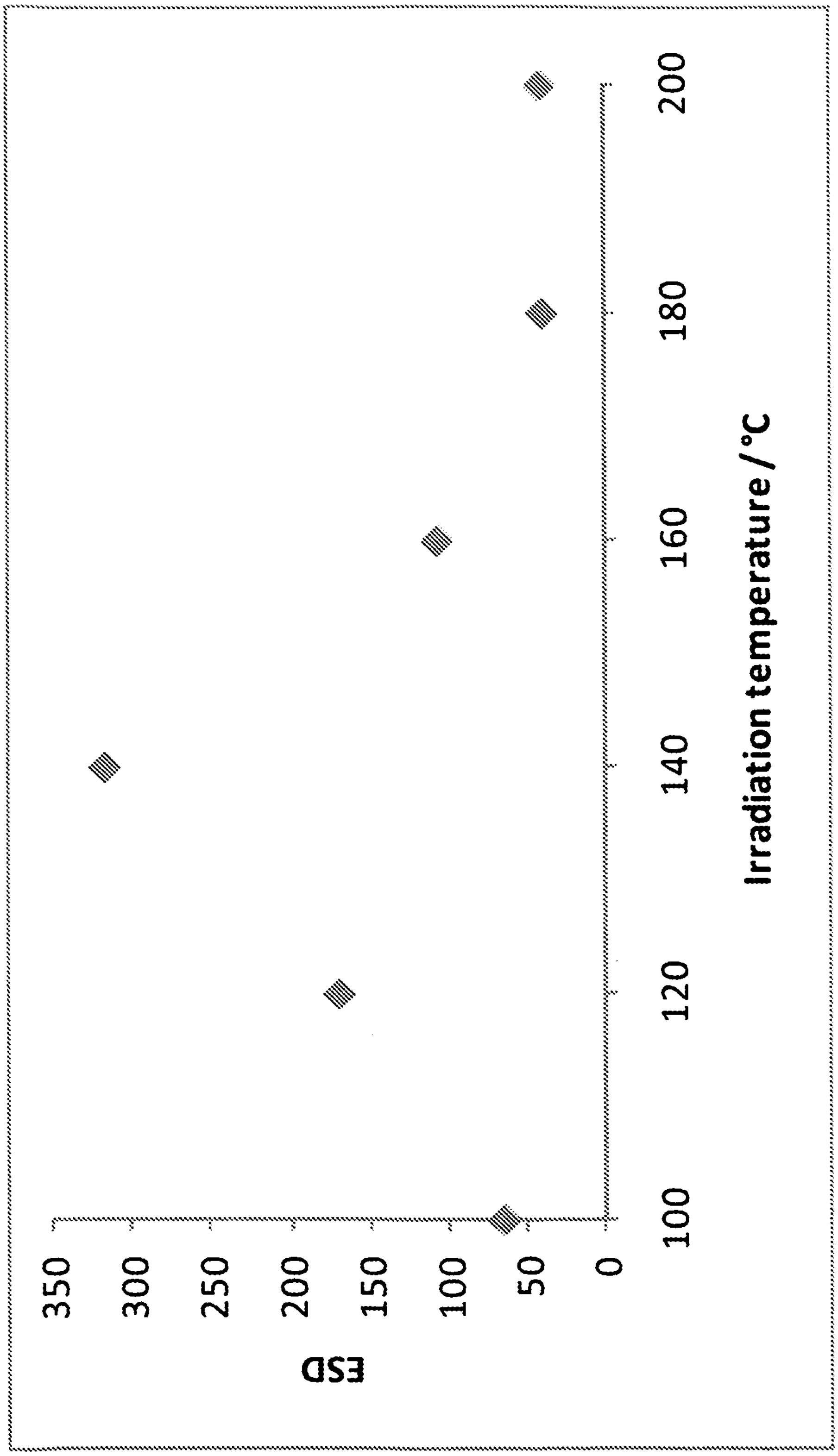
ESD
350
300
250
200
150
100
50
0
100
120
140
160
180
200
Irradiation temperature /°C

FIGURE 2